Europäisches Patentamt

**European Patent Office**

**Office européen des brevets**

(11) Publication number: **0 150 904**
A2

# EUROPEAN PATENT APPLICATION

(21) Application number: **85300057.8**

(22) Date of filing: **04.01.85**

(51) Int. Cl.⁴: **G 06 K 11/06**

(30) Priority: **04.01.84 US 568044**
**10.12.84 US 680234**

(43) Date of publication of application: **07.08.85**
**Bulletin 85/32**

(84) Designated Contracting States: **BE DE FR GB IT NL**

(71) Applicant: **CARROLL TOUCH TECHNOLOGY, INC.,**
**2800 Oakmont Center, Round Rock Texas 78664 (US)**

(72) Inventor: **Carroll, Arthur B., 207 Ridgewood Drive,**
**Georgetown Texas 78626 (US)**
Inventor: **Borovec, Richard T., 1216 West John Street,**
**Champaign Illinois 61821 (US)**

(74) Representative: **Gray, Robin Oliver et al, BARON &**
**WARREN 18 South End Kensington, London W8 5BU**
**(GB)**

(54) Cursor control apparatus and method.

(57) A cursor control for a video device incorporates a plurality of light beams arranged in paths adapted to be selectively interrupted by an operator's finger, for controlling speed and direction of cursor movement.

Apparatus for the cursor control comprises a housing (10) having a recess (12, 14) for supporting a plurality of spaced apart light beams (18) and means (22, 70, 72, 62, 74, 78, 80, 84-87) for developing an electrical signal in response to manual interruption of one or more of said light beams by an operator, said signal being representative of movement of the cursor in a predetermined direction and at a predetermined speed according to the beam or beams interrupted. Means are provided for moving the cursor in a direction corresponding to the position of manual interruption from a control position (16).

CURSOR CONTROL APPARATUS AND METHOD

DESCRIPTION

The present invention relates to an apparatus and method for controlling movement of the cursor of a video display device, and more particularly to that type of cursor control which is commonly referred to as a digit mouse or finger mouse.

The cursor of a video display device is frequently controlled by keys of a keyboard. Typically, four keys are designated cursor control keys, and each moves the cursor one step in its respective direction, for each depression of that key. If the key is held depressed, successive steps of movement of the cursor are executed. While this type of control apparatus is effective for controlling cursor movement, its use is relatively clumsy, because typically the operator must look at the keyboard to find the appropriate key for moving the cursor in the desired direction. Such apparatus is not very effective for moving the cursor over long distances over the video display screen, because even the repeated action, when the key is held down, is relatively slow, and the first repetition is delayed, after the initial depression of the key, to prevent unintended repeat movements in response to hesitant or tentative key operation.

A variety of mouse-type cursor control units have been developed in connection with the operation of computer systems, particularly micro computer systems. In one common variety of such mouse-type control units, a hand held unit is provided having a ball or a wheel which may be rolled on a flat, horizontal surface, and a converter device converts rotation of the ball or wheel into digital signals which control the movement of the cursor of the video display device. In another mouse-type cursor control unit, the mouse is moved on a horizontal surface having a pluarality of grid lines, oriented in x and y direction, and photo electric means senses the grid lines traversed by the mouse in order to develop the required digital signals for controlling movement of the cursor. This type of control unit is sometimes referred to as an optical mouse.

These mouse designs are quite effective controlling gross cursor movement over a large distances, but are less effective than the key operated type for controlling single position movements. This is not a function of the mouse per se, rather a function of the software which drives the mouse.

These previous mouse designs are also subject to other limitations. Both designs require a relatively large flat surface over which the mouse is to be moved, which reduces the available space for other materials which must be used with the computer system, such as reference or operation manuals, data lists, etc. In addition, each requires a separate housing for the mouse which must be separate from the console or keyboard of the computer, and must be connected thereto by means of a flexible cable. The separate housing, and the cable, add clutter and take up flat space which is better devoted to printed or written materials the operator needs to use in connection with the current program.

It is therefore desirable to provide a mouse-type cursor control unit which is not subject to these disadvantages.

It is a principle object of the present invention to provide a mouse-type control unit which is

A more specific object of the present invention is to provide a mouse-type control unit which may be integrated into the console or keyboard of a computer system, and which does not require a separate housing or connecting cable.

It is further object of the present invention to provide such a cursor control unit in which the direction and speed of movement of the cursor is controlled by the direction and speed with which the operator's finger is moving.

The present invention achieves the advantage of permitting simple and effective control of the direction and speed of movment of the cursor of a video display device, simply by having the operator move a finger corresponding to the direction and speed of movement which is desired. No key operation is needed to effect cursor movement. Control of cursor movement is very effective, using the present invention, because an operator need not watch the cursor control apparatus, but by observation of the video screen, can easily move his operating finger in response thereto, in accordance with the movement which is desired. There is no need for the operator to look at or observe the cursor control unit itself.

The present invention allows single position movements, and large distance movements, with equal effectiveness.

These and other objects and advantages of the present invention will become manifest by an inspection of the following description and the accompanying drawings:

In one embodiment there is provided apparatus for controlling movement of the cursor having one or more depressions disposed in the console or keyboard of

the computer system, into which the operator may place a finger. A plurality of light beams extend across and through the depression, such that one or more beams may be broken or interrupted by the operator's finger when it is in a position between the light source and the photo detector which mark the end points of such beam. The beams are arranged to detect movement of the operator's finger in x and y directions, relative to a home or central position, with large degrees of movement from the home position being effective to control more rapid movement of the cursor.

In another embodiment of the invention, position sensing appratus is provided for sensing the position of an operator's finger relative to a home position, without the use of light beams. Movement of the operator's finger from the home position controls movement of the cursor in the direction equivalent to the direction of movement, at a rate dependent on how far the operator's finger is moved from the home position.

Reference will now be made to the accompanying drawings in which:

Fig. 1 is a plan view of a first illustrative embodiment of the present invention;

Fig. 2 is a plan view of an alternative embodiment of the present invention;

Fig. 3 is a further alternative embodiment of the present invention;

Fig. 4 is a functional block diagram of apparatus for producing digital signals for effecting cursor movement;

Fig. 5 is a functional block diagram of a program of operations which may be carried out in the utilization of apparatus embodying the present invention;

Fig. 6 is a functional block diagram of an alternative program; and

Fig. 7 is a diagramatic view of an alternative embodiment of the invention.

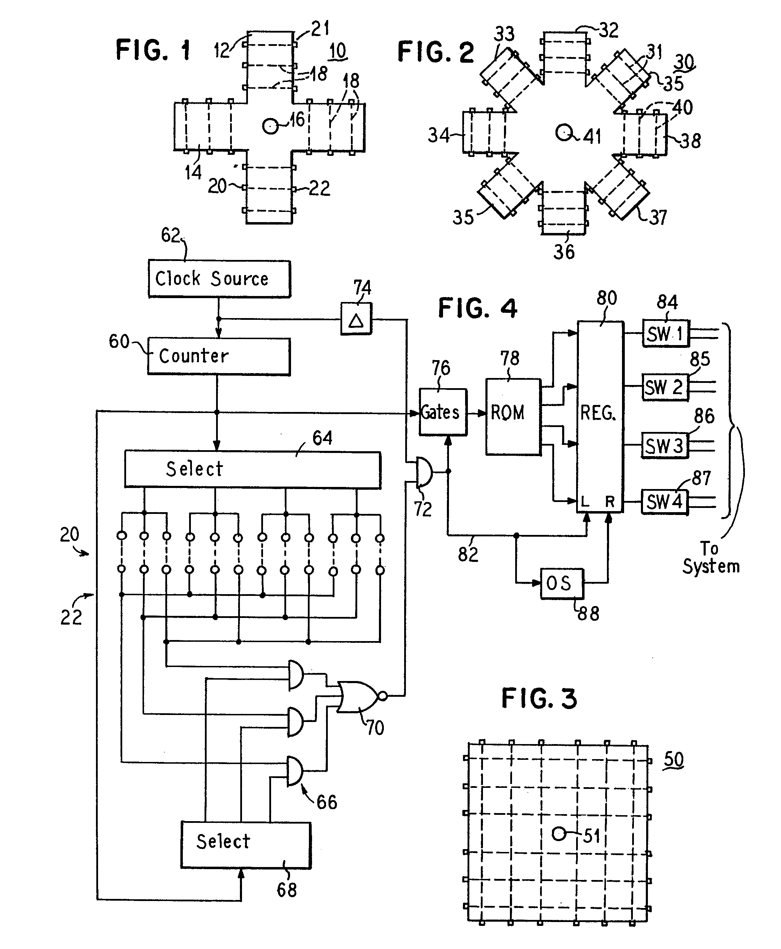

Referring to Fig. 1, a plan view of an illustrative embodiment of the present invention is illustrated. The mouse-type cursor control unit of Fig. 1 does not require a separate housing, but may be integrated into the console or keyboard of a computer system. As shown, it is incorporated in a housing 10, which it shares in common with the console or keyboard of the computer system. Integrally formed into the housing 10 is a pair of grooves 12 and 14, which are othogonal to each other to form a cruciform or cross shape with four equal legs. Each of the grooves is wide enough to accept the finger of an operator, and the operator's finger may occupy a variety of positions along the length of each leg. A small button 16 in the center area of the intersection of the two grooves identifies the central of home position of the operator's finger by, the operator's tactile sense. This physical assembly of grooves is hereinafter referred to as a "digit mouse" or "finger mouse" or simply "mouse". A plurality of light beams 18 are provided along the length of both grooves 21 and 14, such beams being parallel to the upper surface of the casing 10 but spaced inwardly or downwardly therefrom by a fraction of the depth of the groove. Each beam is generated by a light source 20, and is detected bvy a photo detector 22, or the like. In the apparatus illustrated in Fig. 1, three beams are provided in each groove leg. Also two beams intersect the center or "home" position for a total of 14 beams.

In operation, when the operator's finger rests in the home position, identified by the button 16, only the two central beams are broken, and the cursor is not moved. After the central beams are broken, and when the operator's finger is moved in the x direction rightwardly sufficient to break the first beam, pulses are supplied for movement of the cursor, such that the cursor is moved one position during a given time and interval, which is conveniently about 10 positions per second. This rate may be set faster or slower if desired. Since the central beams must be broken before the cursor moves, premature undesired movement of the cursor is avoided. When the operator's finger is moved further in the same direction, to break the second beam, pulses are generated to move the cursor twice as fast during each of the time intervals. When the operator's finger is moved further so as to break the third beam, pulses are generated so as to move the cursor at a rate of four or more positions per time interval. The direction of movement of the cursor is controlled by in response to the direction of movement of the operator's finger from the home position. In this way, movement of the cursor and in the four directions corresponding to the principle compass points is readily effected.

As long as the operator's finger breaks one of the beams, the cursor position moves repeatedly, through the appropriate number of positions during each time interval. The speed of movement may be made faster or slower by adjusting the finger position, and movement stops when the operator either retracts his finger from the mouse, or moves his finger to the central position, which he can easily locate by feel alone.

No observation of the cursor control unit is required by the operator, because he can tell by feeling the central button 16 when his finger is at the home position, and be observation of movement of the cursor, he can readily determine without looking at the cursor conrol unit where his finger is located currently. Accordingly, there is no need for him to divert his attention from the video screen, so that rapid and effective movement of the cursor is possible. The provision for moving the cursor only one position per unit period of time when the first beam is broken provides a ready control over single step movement of the cursor.

Fig. 2 is a plan view of an alternative embodiment of the present invention. The cursor control unit or mouse is formed integrally with the panel 30 of a keyboard or console of a computer system, but instead of having two orthogonal grooves with four legs as shown in Fig. 1, the grooves have eight legs 31-38. A central button 41 or other tactile indicator is provided to indicate be feel the central position to the operator, and each of the eight legs of the grooves are provided with a plurality of light beams 40, which all correspond to the light beams 18. In the apparatus of Fig. 2, an operator may cause the cursor to be moved simultaneously in both x and y directions, by positioning his finger in one of the four additional grooves corresponding to the compass points of northeast, southeast, southwest and northwest. By use of the additional four legs of the grooves, movement of the cursor in diagonal directions is greatly facilitated, and is accomplished more rapidly than with the apparatus of Fig. 1, because movements of the appropriate number of positions in both the x and y direction occur during each time interval. In other respects the operation of the apparatus of Fig. 2 is the same as described in connection with Fig. 1.

In Fig. 3, another alternative embodiment of the present invention is illustrated. Again the finger mouse is mounted in the panel 50 of the keyboard or console of the computer system, but instead of having a plurality of elongated grooves, the groove or depression in the panel 50 is in the shape of a square. A button 51 or other tactile indicator is provided for marking center of the square, which corresponds to the home position for the operator's finger. A plurality of light beams traverse the square, crossing each other in the x and y directions, so that an operator's finger may break two orthogonal light beams at any position within the square, and the beams which are broken are those which pass through that location. The 12 light beams illustrated correspond to the 12 light beams of Fig. 1, with three each provided for movement in two opposite x directions and two opposite y directions. The beams closest to the central position are those which move the cursor one position per unit time, while the beams which are closest to the edges of the square move the cursor most rapidly. By use of the apparatus in Fig. 3, it is possible for the operator to move the cursor simultaneously at different rates in the x and y directions. For example by positioning his finger near the right hand side of the square, slightly above the center line, the cursor is moved rapidly in the positive x direction, but more slowly in the positive y direction.

It is apparent that all three of the arrangements described above may be employed by an operator without requiring the operator to look at the cursor control itself. The operator's attention may remain on the video display screen, since the different finger positions within the mouse may readily be deteremined either by feel, or by observation of the movement of the cursor. The groove or depression form of the present invention makes it easy for the operator to locate the cursor control device initially, with no visual observation being required, since the edge of the groove defining the perimeter of the mouse may be readily identified by tactile sense or feel. In this respect the present invention accomplishes the advantages of previous mouse-type cursor control units which do not require operator observation for their use, but rely entirely on the opeator's tactile sense in operating the separate housing of the mouse over its horizontal surface.

It is conventional to use one to three keys in conjunction with a mouse-type cursor control unit, for signaling computer functions to be selected, such as selecting one of a series of options displayed on the screen, in accordance with the cursor position, selectively deleting material from the screen, etc. If desired, such keys may be mounted directly on the panel 10, 30 or 50, respectively, adjacent the grooves or depressions of the mouse, so that an operator can locate and select these keys, by feel, relative to the position of the mouse, while the cursor control unit is being operated. If such keys are located below or to the side of the mouse, they may be selected and depressed by the operator's thumb or little finger, simultaneously with the opeator's use of the index finger of the same hand to control the direction and speed of cursor movment. Alternatively, the keys may be located elsewhere on the panel or keyboard, for selection by the operator's other hand.

Referring now to Fig. 4, a functional block diagram of apparatus for carrying out the principles of the invention is illustrated. A counter 60 receives clock pulses from a source of clock pulses 62. For each pulse of the clock geneator, the counter 60 is incremented, and continously counts through its entire radix. The multi-bit output of the counter is connected to inputs of a selector circuit 64, the outputs of whcih are connected to drive light emitting diodes 20, or other light sources, for creating light beams at times within each cycle determined by the selector circuit 62. Three light sources 20 are selected at a time, as members of a single group.

The various photodetectors 22 are all connected in groups to a plurality of gates 66 which are enabled by a select circuit 68 in accordance with the output of the counter 60. Preferably, the light emitters 60 are driven in groups, so that a plurality of lamps are energized at the same time, and the photodetectors 22 are enabled in groups, with only one member of the selected light emitter group corresponding to one member of the selected photodetector group at any given time. This allows for the inspection of individual beams at individual time slots within a scanning cycle, i.e., a complete cycle of the counter 60. If the selected group of photodetectors produces an output pulse, the beam associated with that time slot is recognized as being not interrupted. If no pulse is produced by the selected group of photodetectors, during a time slot, the beam associated with that time slot is recognized as being interrupted.

The signal from the selected group of photodetectors is passed through an NOR gate 70 to an input of an AND gate 72, which has its other input connected to a sychronizing pulse derived from the clock source 62 and delayed by a delay unit 74 to allow the pulse to arrive at the gate 72 at the proper time for sampling the selected group of photodetector 22. The gate 72 is enabled during the time slot corresponding to an interrupted beam and enables a gate circuit 76 to pass the multibit output of the counter 60 to the input of a read only memory or ROM 78. The ROM decodes the interrupted beam indentifier signal from the gate 76 and produces a group of control signals which are presented to the input of a register 80, and loaded thereinto by means of a strobe pulse from the AND gate 72 over a line 82. The output of the register 80 is connected to the input of four switch units 84-87, which may be analog switch units or alternatively R-S flip-flops. The register 80 is reset by the time out of retriggerable one shot 88 if no beam is interrupted within a time period of about two cycles of the counter 60.

The states of the switches 84-87 indicate the desired cursor movement. For example, in one arrangement, the switch 84 indicates whether movement is desired in the x direction or in the perpendicular y direction. The switch 85 indicates the sign of the desired movement. The other two switches 86 and 87 together indicate the desired speed of movement. If neither switch is set, no movement is called for. If the switch 86 is set with switch 87 reset, the cursor is moved one position during each time interval, whereas the opposite condition causes the cursor to be moved two positions during each time interval. When both switches 86 and 87 are set, the cursor is moved at its maximum number of positions per time interval.

The switches 84-87 are connected to computer system via a port or the like, and their condition is interrogated under software control. For example, a periodic signal from a timer may cause an interrupt during each time period which examines the state of the switches and performs the operations necessary to move the cursor. Alternatively, the state of the switches may be read in through the port whenever the condition of one or more switches is charged.

The drawing of Fig. 4 is diagramatic in nature, and is designed to illustrate the various individual functions carried out be the apparatus. It will be obvious to those skilled in the art that conventional logic circuits may be combined in various ways to provide signals to the computer system that a given beam has been interrupted and that cursor movement is required. Alternatively, a microprocessor may be used.

While the apparatus of Fig. 4 is specifically designed to be used with the apparatus of Fig. 1, which has 12 beams of which only axis at a time may be interrupted, it can be expanded to accomodate the arrangement of Fig. 3 merely by providing additional groups of light emitters and photodetectors, or adding members to the existing groups, and selecting a counter with a radix at least equal to the total number of beams, so that there is one unique time slot and counter output corresponding to each individual beam. In addition, more beams may be added to the legs of Figs. 1 or 2, with the circuit of Fig. 4 being modified in the same way.

In the arrangement of Fig. 3, two beams may be interrupted simultaneously, which require two separate beam identifications to the computer system. These can be made available to the computer system by providing two duplicates of the apparatus of Fig. 4 for the x and y beams, individually, with the beam interruption information being made available to the computer system simultaneously for both groups through eight switches like the switches 84-87. This allows two beams to be active during the same time slot, which permits the light emitters of two independent groups (such as the x group and the y group) to be connected in parallel, thus requiring only a single select unit 64, although two separate select units 68 are required.

Alternatively, the apparatus of Fig. 4 may be employed, in which each beam is scanned individually and the identification of all interrupted beams is manifested by the register 80, as the time slot of each interrupted beam is reached. In this case, the software used by the system to input data from the switches 84-87 must accomplish the input operation during the same time slot in which the condition of the switches is changed, because the switches may be set differently for two successive time slots in case the beams of two adjacent time slots are interrupted.

Such software can also accomodate the case in which multiple beams are interrupted in the apparatus of Figs. 1 or 2, either by relatively close separation of adjacent beams, such that two are interrupted when the operator's finger straddles both of them, or when the operator uses multiple fingers in using the mouse. In that event, the software may cause the cursor to be moved an intermediate number of positions during each time interval when two adjacent beams are interrupted, whereas the speed of movement is slower when only a first of the beams is interrupted while a faster speed is achieved when only the other beam is interrupted. This allows for a smooth progression of cursor speeds as the operator moves his finger along the groove or depression, allowing five different movement speeds instead of three when three beams are employed in each leg of the apparatus of Figs. 1 and 2, for example. A sixth speed is possible in response to simultaneous interruption of all three beams, which can be accomplished by laying a finger in the groove up to the first or second joint, or by using plural fingers. The same operation is possible with the apparatus of Fig. 3, which gives a large number of combination of individual speeds in the two perpendicular directions.

The x and y cursor positions are normally maintained in registers which are employed for that purpose by the computer system. Typically, the video output display device is controlled by an integrated circuit knwon as a CRT controller, and the CRT controller has access to random access memory or RAM which contains the registers for storing the current cursor position. The precise manner in which these registers are accessed and incremented or decremented depends on the particular CRT controller which is being used. In all cases, the manufacture's specifications for the CRT controller provides information necessary for accessing and modifying the cursor position registers.

The switches 84-87 are set in accordance with the desired cursor movement, and the state of these switches is read by means of a conventional input port of a computer system. As an example, when the present invention is being used with the IBM PC, the various states of four switches may be set in accordance with the interrupted beams. The switch 85 is set or reset in accordance with whether the direction of cursor movement is positive or negative relative to the selected axis. The remaining two switches 86 and 87 are set in accordance with the desired speed of movement of the cursor. When no movement is desired, i.e., the operator's finger is in the central position, neither switch is set. When a speed of movement of one position per time interval is desired, the switch 86 is set and when the beam for the intermediate speed is broken the switch 87 is set. Only when the last beam, calling for a maximum speed of movement of the cursor is interrupted, are both switches 86 and 87 set.

The state of the four switches may be read using the IBM PC through the game controller port, using the STRIG functions or statements, incorporated into the advanced basic statements and functions executable by the IBM PC. They may be incorporated into a program written in the basic language, so the cursor movement may be controlled by periodic execution of such program. In the case in which the operator's finger is in the central position of the cursor control apparatus, no cursor movement is accomplished, and the computer system can return to its background routine.

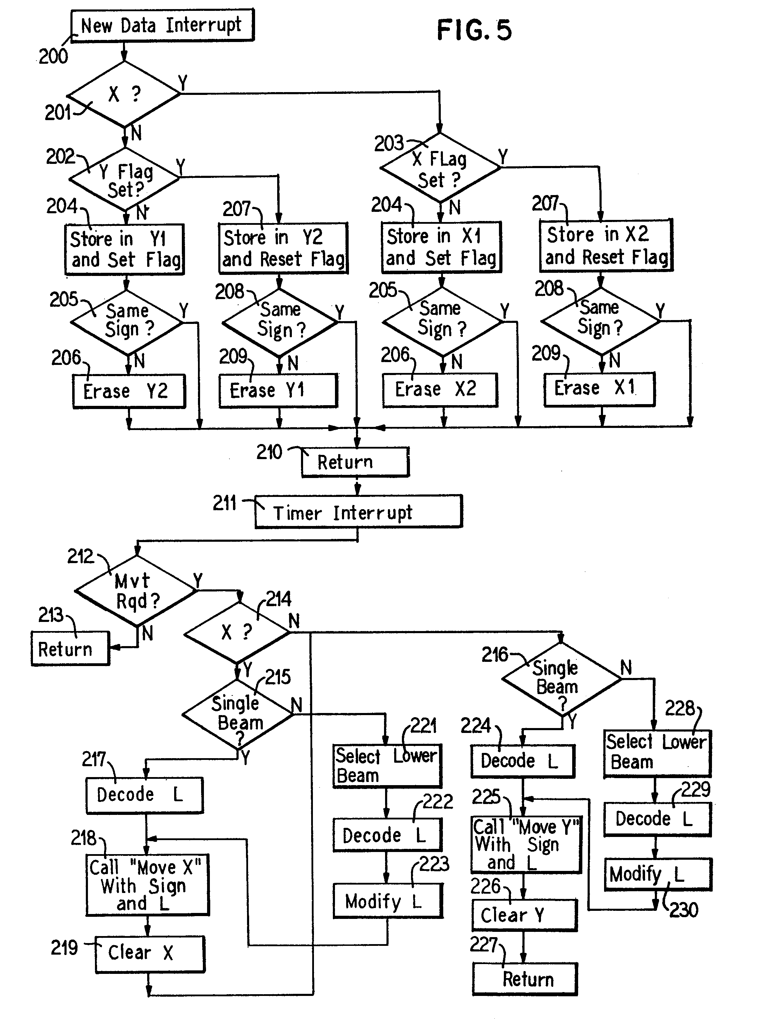

Fig. 5 illustrates a flow chart of a program which may be used. The program is entered by one of two interrupts. The first interrupt occurs when any of the four switches 84-87 of Fig. 4 assumes a new position, indicating new data. When this occurs, the program of Fig. 5 is entered by the unit 200 receiving control. It passes control to a decision unit 201, which inspects the state of the switch 84 to determine whether the beam identified by the current state of the swithces corresponds to an x beam or a y beam. Control is then passed to the unit 202, if a y beam is recognized, or to unit 203 if the interrupted beam is an x beam.

The unit 202 inspects the state of a software flag, provided for the purpose of selecting the storage location, and if the flag is found not set, unit 204 recieves control and stores the beam identification in the storage location Y1, and sets the flag. Otherwise, the unit 207 recieves control, storing the beam identification in the storage location Y2, and resets the flag. Accordingly, the units 204 and 207 receive control for successive Y beams, so that the two storage locations Y1 and Y2 store the identification of the two most recent interrupted Y beams. Unit 205 receives control from unit 204, which inspects the sign of the beam identifier stored in Y1 and Y2. If the sign is the same, control is returned to the main program by means of unit 210. Otherwise unit 206 recieves control and the content of storage location Y2 is erased because it is obsolete. The unit 207 passes control to unit 208, which examines the sign of the data stored at Y1 and Y2, and erases the data at Y1 if the signs are different. This insures that the most recent interrupted Y beam is maintained in storage, with a previously interrupted Y beam also maintained in storage, unless the sign of the direction of movement is different, in which case the old information is obsolete.

If unit 201 recognizes that the data on the switches 84-87 correspond to an x beam, unit 203 receives control, and determines whether the x beam storage flag is set. If not, unit 204 stores the beam identification in the storage location X1, and sets the flag, after which the unit 205 examines the signs of the data stored at X1 and X2, and the unit 206 erases the data at X2 if the signs are different. If the X flag is set, the unit 207 receives control, stores the incoming data at storage location X2 and resets the flag, after which unit 208 examines the signs, and unit 209 erases the data stored at X1 if the signs are different. In any event, the unit 210 returns control to the main program which was interrupted by unit 200.

A number of successive interrupts can occur, during a predetermined period of time. Accordingly, at predetermined periods, defined by time interrupt, the identification of the last one or two interrupted X beams and Y beams are maintained in storage.

At the end of the predetermined period, a timer interrupt occurs, and the unit 211 receives control.

It passes control to a unit 212, which determines whether any cursor movement is required. This is determined whether any cursor movement is required. This is determined by examining the contents of X1, X2, Y1 and Y2, and if the contents are all zero, no movement is required. Control is then returned to the running program by means of the unit 213. If movement is required, control passes to unit 214, which inspects storage locations X1 and X2 to determine whether X movement is required. If so, control is passed to the unit 215, and otherwise control passes to the unit 216. The unit 215 determines whether only a single x beam has been interrupted, and if so, control passes to the unit 217 which inspects the state of the switches 86 and 87, which are stored in storage location X1 or X2, and derives therefrom a parameter L which corresponds to the length of movement, i.e. the number of positions which the cursor is to be moved in the X direction. If the switch 86 is alone set, L is equal to 1, for incremental cursor movement. If the switch 87 is alone set, L is equal to 4, corresponding to a movement of four cursor positions. if the swithces 86 and 87 are both set, L is equal to 16, calling for movement of the cursor by 16 positions. Then control is then passed to the unit 218, which calls the subprogram entitled "Move X" (not shown), passing thereto as parameter S, the sign of movement (corresponding to the setting of switch 85) and L which is calculated by the unit 217. When control returns from the subprogram, the unit 219 clears the storage locations X1 and X2, preparatory to a new sequence of operations during the following predetermined time interval.

If two X beams have been interrupted during the previous time interval, the unit 221 receives control from the unit 215, and selects the storage location X1

0150904

and X2, whichever stores the beam identification calling for the lesser amount of movement. Unit 222 then receives control, which decodes the parameter L from the setting of switches 86 and 87 as stored at this location. If the innermost beam is interrupted, the unit 222 sets L=1, whereas L set to 4 if the intermediate beam is interrupted. Then the unit 223 receives control, which inspects the settings for the switches 86 and 87 stored in the other storage location (X1 or X2), and modifies L accordingly. If the second interrupted beam is the intermediate one, L is increased by one, whereas if the second interrupted is the third beam, L is increased by four. Then control is passed to the unit 218, which calls the "Move X" subprogram described above. The result is that when the inner and intermediate beams are interrupted simultaneously, the movement is by 2 positions (between the 1 and 4 positions of movement when the first or second beam is broken individually), and 8 positions when the second and third beams are broken simultaneously (between the 4 and 16 positions when these beams are interrupted individually).

The unit 216 receives control from the unit 220, provided movement of the cursor in the X direction was called for, or otherwise from the unit 214 directly. The unit 216 inspects the stored data to determine whether a single beam is interrupted, and if so, unit 224 decodes the parameter L, and the unit 225 calls the Move Y subprogram, passing the sign (determined from the setting of switch 85), and the L parameter. If two Y beams are interrupted, the unit 228 selects the lower beam, the unit 229 decodes L for this beam, and the unit 230 modifies L in accordance with the second interrupted beam. These units function in identical manner described for the units 221-223. Then the unit 225 receives control, to call the Move Y subprogram.

When the Move Y subprogram is completed, control is passed to the unit 226, which clears the data stored in the storage locations Y1 and Y2, and then unit 227 returns control to the running program which was interrupted by the Unit 211.

Although Fig. 5 has been described in terms of a computer program or software, it is apparent that each of the units shown therein may be replaced by a hardware unit for performing the indicated function.

The apparatus or program of Fig. 5 may be employed with any of the cursor control units of Figs. 1-3, together with the apparatus of Fig. 4 for identifying interrupted beams by setting the four switches 87-87 in accordance with the beam identification. The apparatus or program of Fig. 5 operates rapidly enough to insure that the identification of every newly interrupted beam is stored, and the required cursor movements are accomplished at the end of each predetermined period. The length of such period may be controlled by selecting the times of operation of the timer interrupt 211. It will be appreciated that the speed of the cursor is caused to increase geometrically, in accordance with the position of the operator's finger. Thus, the number of positions moved during each time interval is 1, 2, 4, 8 or 16, depending on which beam or beams are interrupted. In an alternative arrangement, the subprograms Move X and Move Y, may recognize interruption of the endmost beam individually (by determining whether L is calculated to equal 16), and, in response thereto, move the cursor directly to the endmost position in the indicated direction. For example, this would move the cursor directly to the extreme right or left hand position in a given row, or to the extreme upper or lower row for a given position or column. When the operator combines X and Y movements, by interrupting X and Y beams simultaneously, the cursor may be moved directly to the four corners of the video screen.

Fig. 5 corresponds to a program listing which is attached to this specification as an appendix. The listing is written in Basic for the IBM PC, with four switches 84-87 corresponding respectively to switches A1, B1, A2 and B2 connected with the standard game controller port.

In a preferred form of the invention, the recesses of the mouse are about 6 mm or 1/4 inch in depth, and the legs of Figs. 1 and 2 are preferably about 12 mm in width. The side walls of the recesses have aligned apertures, and the light emitters 20 and photodetectors 22 are aligned with these apertures inside the housing. Preferably, the light emitters are infra red emitters, and the detector are primarily or exclusively sensitive to infra red radiation, so they are not sensitive to ambient lighting conditions.

While the housing of the mouse may be integral with the computer console or keyboard, it is also within the scope of the present invention to provide a separate housing for the mouse if desired, which makes it easier to retrofit the present invention to existing equipment, and still preserve the advantage of not requiring a large flat surface for mouse operation.

While the description of Fig. 5 is in terms of scanning the switches 84-87 independently, it is convenient, when the mouse of the present invention is integrated into the console or keyboard, to scan the switches 84-87 together with the regular keys of the keyboard, and in such a case, the usual program used by the computer system for recognizing and responding to operation of key switches may be employed. Alternatively, the several photodetectors may be served individually during the keyboard scanning routine, in which case the selector circuitry for the photodetectors, the ROM, the register and the switches 87-87 are not required.

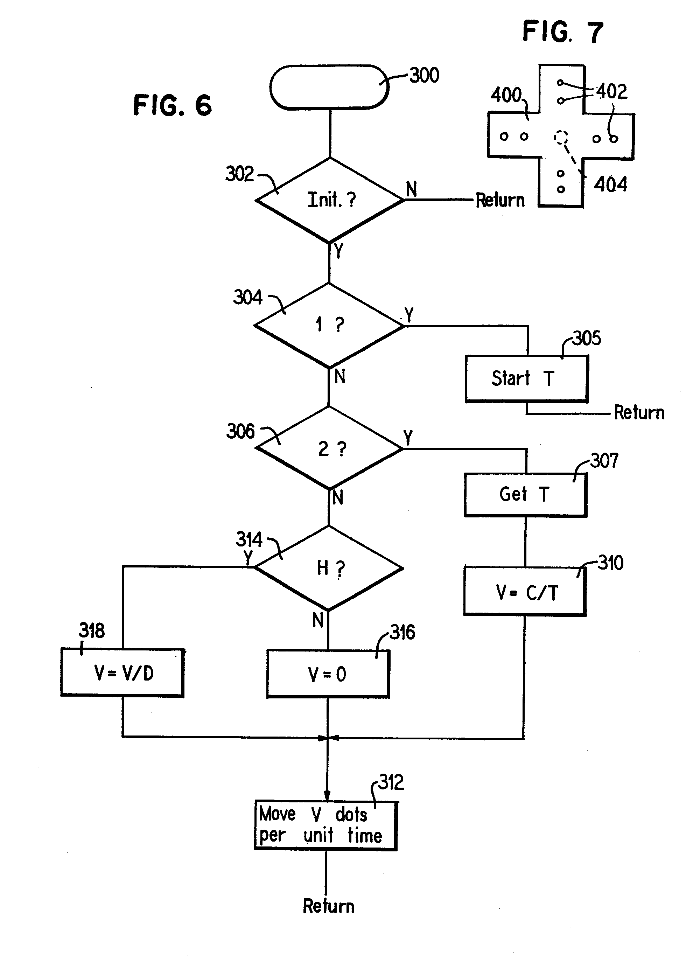

Fig. 6 shows an alternative program which may be used to control position of the cursor in response to the speed at which the operator moves his finger from home position. The program is entered at point 300 at frequent intervals in order to check for an interrupt signifying that one of the beams of the finger mouse has been broken. Assuming a first beam spaced somewhat from home position in a + x direction, a second beam spaced outwardly from the first beam, and a third beam at home position, unit 302 determines whether any of the beams has been broken or whether a move is in progress. If not, returns control to the main routine running concurrently via line 303. Otherwise, units 304 and 306 determine when the first and second beams are broken. Unit 304 passes control to unit 305 which starts a timer T running from zero, and unit 306 passes control to unit 307 which gets the current state of the timer T which is inversely proportional to the speed of movement of the operator's finger between beams 1 and 2. Then unit 310 receives control, which sets the velocity V of cursor movement equal to a constant C divided by the content of the timer T.

This could be, for example, a movement of 100 dot positions per second for a moderate speed finger movement, and less for a finger movement which is slower. The precise velocity can be adjusted by modifying the paramter C. Then control passes to a unit 312, which controls operation of the apparatus which actually moves the cursor.

If neither beams 1 and 2 are broken, control passes to unit 314 which determine if the home beam is broken. If so, unit 316 receives control and immediately sets the velocity to zero, thus stopping the cursor. In this way, a rapid movment may be terminated at any time.

If the home beam is also not broken, a move is in progress, and control passes to unit 318 which calculates a new cursor velocity of V/D. D may be a parameter chosen by the operator to yield a desired rate of decay of the cursor velocity. When D=2, the cursor velocity is reduced by 1/2 if a clock tic has occured since unit 318 last received control. A clock tic may be 1/4 second, for example. Preferably a flag is set by the tic and unit 318 checks the flag and resets it after making the velocity adjustment if it is found set. Otherwise, control is passed to unit 312 with no change in velocity.

Because of the operation of unit 318, the cursor movement is automatically slowed and stopped after a time. The slower movement makes it possible for the operator to stop it precisely at the desired location by returning his finger to position to break the home beam.

Although the above has been described for the +x direction it will be understood that similar apparatus is provided for the -x and both y directions.

Referring to Fig. 7, an alternative embodiment of the invention is illustrated. It incorporates a base 400, which may be either separate from the normal keyboard, or integrated into the keyboard as a part of it. The base has a number of conductive buttons 402 arranged on its surface, where they may be touched by an operator's finger. The buttons extend in the four individual directions from the central area of the base where no button is present. Each button is connected to circuitry (not shown in Fig. 7) which develops a signal identifying the button touched by the operator. This signal is used by the apparatus described above in place of the light beams and light beam detectors which have been described. Apparatus for developing electrical signals in response to human touch is well known and therefore need not be described specifically. Optionally, a further button 404 may be provided in the central position of the based 400, to provide a tactile feedback to the operator of the position of his finger. Optionally, the central button 404, if present, is raised more or less than the others to provide tactile feedback of the home position.

In an alternative arrangement, the speed of movement of the operator's finger away from the central or home position determines the velocity of cursor movement. In such an arrangement, the new data interrupt unit 200 performs the function of storing the time at which successive items new data are available, corresponding to movement of the operator's finger away from home position and into one or more beams. The time interval between leaving the central beams and breaking the next beam (or the time between breaking two successive beams) is calculated (by subtraction) and that time interval is used to control the number of positions the cursor moves during each unit time. This can be accomplished by programming the timer which prorates the timer interrupt 211 to produce its interrupt signals at a rate proportional to the speed of movement of the operator's finger.

- 24 -

In the foregoing, illustrative embodiments of the present invention have been described. It will be apparent to those skilled in the art that various modifications and additions may be made without departing from the essential features of novelty thereof, which are intended to be defined and secured by the appended claims.

CLAIMS:

1.  Apparatus for controlling movement of the cursor of a video display device, comprising, in combination; housing means having a recess and means for supporting a plurality of spaced apart light beams within said recess, and means for developing an electrical signal in response to manual interruption of one or more of said beams by an operator, said signal being representative of movement of said cursor in a predetermined direction and at a predetermined speed, corresponding to the interrupted beam or beams.

2.  Apparatus according to claim 1, including means connected to an responsive to said signal for moving said cursor.

3.  Apparatus according to claim 1, wherein said video display device is a component of a computer system, and wherein said housing is integral with the console or keyboard of said computer system.

4.  Apparatus according to claim 1, wherein said recess has a plurality of elongate legs, with a plurality of said light beams being spaced along the length of each of said legs.

5.  Apparatus according to claim 4, wherein each of said legs extends outwardly from a central position.

6.  Apparatus according to claim 5, including tactile identifying means for marking said central position.

7. Apparatus according to claim 6, wherein said tactile identifying means comprises a raised portion disposed within said recess.

8. Apparatus according to claim 4, wherein each of said legs has at least three light beams spaced along its length.

9. Apparatus according to claim 8, wherein each of said light beams has a light source and a photo responsive element defining opposite ends of said beam, and including means connected to said photo responsive elements and responsive to interruption of the beam closest to one end of its respective leg for moving said cursor a single position during each of a plurality of equal time intervals, and responsive to interruption of the adjacent beam by more than one position during said time intervals, and responsive to interruption of the beam furthest from said one end for moving said cursor through a greater number of positions than said adjacent beam, during each said time interval.

10. Apparatus according to claim 1, wherein said recess is in the shape of a square, and wherein said light beams are arranged to cross each other orthogonally within said square.

11. A method of controlling the position of the cursor of a video display device in response to manual movements of an operator, comprising the steps of; providing a housing having an elongate recess in its external surface, providing a plurality of light beams within said recess and spaced along its length, and providing means for moving said cursor in a given direction at one of a plurality of predetermined speeds whenever one or more of said beams is interrupted, the speed of movement increasing as successive ones of said beams are interrupted.

12. The method according to claim 11, including the step of placing said recess in the housing of a console or keyboard of a computer system which employs said video display device as a component.

13. The method according to claim 11, including the step of breaking one or more of said beams by placing a finger in said recess.

14. The method according to claim 11, including the steps of moving said cursor by one position during each of a plurality of equal time intervals of predetermined length when a first of said beams is interrupted.

15. The method according to claim 11 including the step of interrupting plural beams by placing plural fingers in said recess, and moving said beam at a speed intermediate the speeds at which said beam is moved when said beams are interrupted individually.

16. The method according to claim 11, including the step of establishing said beams by positioning a plurality of infra red emitting devices along the length of said recess, and providing a plurality of infra red detectors in alignment with said emitting devices.

17. The method according to claim 11, including the step of forming said recess with a plurality of legs radiating outwardly from a central position.

18. The method according to claim 11, including the step of forming said recess in the shape of a rectangle, said light beams extending across the width of said rectangle in two perpendicular sets, and moving said cursor in two orthogonal directions in response to simultaneous interruption of beams from both of said sets.

19. Apparatus according to claim 1 wherein said means for developing an electrical signal comprises means for sensing the speed of movement of an object interrupting plural beams, and including means for setting said predetermined speed of cursor movement in response to the speed of said interruption.

20. Apparatus according to claim 18, including means for periodically reducing said predetermined speed until said cursor is stopped.

21. Apparatus according to claim 18 including apparatus operation in response to interruption of a predetermined beam for immediately stopping movement of said cursor.

22. Apparatus for controlling movement of the cursor of a video display device comprising, in combination, a base for supporting plural detecting means for detecting the position of an operator's finger, and for generating a signal responsive to such identification, said plural detecting means being located in spaced relation to sense movement of said finger in plural directions from a central position, and means connected to receive said signals from said detecting means and for moving the position of said cursor in a direction corresponding to the direction of mvoement of said finger from said control position.

0150904

- 29 -

23. Apparatus according to claim 21, including means for causing cursor to move at a speed corresponding to the distance of movement of said finger from said central position.

24. Apparatus according to claim 22, wherein said detecting means comprises means located at plural distances from said central position in the four individual directions.

25. Apparatus according to claim 22, wherein each said detecting means comprises an electrically conductive member adapted to be touched by an operator, and means for developing an electrical signal in response to said touch.

26. Apparatus according to claim 22, wherein said video display is a component of a computer system, and wherein said base is integral with the console or keyboard of said system.

27. Apparatus according to claim 22, wherein said video display device is a component of a computer system, and wherein said base is integral with the console or keyboard of said system base is separate from the console or keyboard of said system.

28. Apparatus according to claim 21, including means for causing said cursor to move at a speed corresponding to the speed of movement of an operator's finger fron said central position.

**FIG. 1**

**FIG. 2**

**FIG. 4**

**FIG. 3**

0150904

2/3

**FIG. 5**

New Data Interrupt (200)

201 X ? — Y → 203 X FLag Set ? — Y → 207 Store in X2 and Reset Flag
201 X ? — N → 202 Y Flag Set? 
203 X FLag Set ? — N → 204 Store in X1 and Set Flag

202 Y Flag Set? — Y → 207 Store in Y2 and Reset Flag
202 Y Flag Set? — N → 204 Store in Y1 and Set Flag

205 Same Sign ? — N → 206 Erase Y2
205 Same Sign ? — Y

208 Same Sign ? — N → 209 Erase Y1
208 Same Sign ? — Y

205 Same Sign ? — N → 206 Erase X2
205 Same Sign ? — Y

208 Same Sign ? — N → 209 Erase X1
208 Same Sign ? — Y

210 Return

211 Timer Interrupt

212 Mvt Rqd ? — N → 213 Return
212 Mvt Rqd ? — Y → 214 X ?

214 X ? — Y → 215 Single Beam ?
214 X ? — N → 216 Single Beam ?

215 Single Beam ? — Y → 217 Decode L
215 Single Beam ? — N → 221 Select Lower Beam

217 Decode L → 218 Call "Move X" With Sign and L → 219 Clear X

221 Select Lower Beam → 222 Decode L → 223 Modify L

216 Single Beam ? — Y → 224 Decode L
216 Single Beam ? — N → 228 Select Lower Beam

224 Decode L → 225 Call "Move Y" With Sign and L → 226 Clear Y → 227 Return

228 Select Lower Beam → 229 Decode L → 230 Modify L

0150904

FIG. 7

FIG. 6

```
            ( 300 )
              |
       302 ___|___
          /Init. ?\___N___ Return
          _____/
              |Y
              |
       304 ___|___
          /  1 ? \___Y_____
          _____/           |
              |N          ___|___ 305
              |          |Start T|
       306 ___|___        |_____|
          /  2 ? \___Y_____    |___ Return
          _____/        |
              |N       ___|___ 307
              |        | Get T |
       314 ___|___      |_____|
          / H ? \Y          |
          \_____/        ___|___ 310
              |N        | V = C/T|
              |          |_____|
   318 ___|___   ___|___ 316       |
  |V = V/D|    | V = 0 |           |
  |_____|    |_____|           |
       |           |               |
       |_____|_____|
                   |
                ___|___ 312
               |Move V dots|
               |per unit time|
               |_____|
                   |
                Return
```